# FASCICULE DE BREVET EUROPEEN

(11) **EP 0 782 239 B1**
(45) Date de publication et mention de la délivrance du brevet: **08.03.2000**
(21) Numéro de dépôt: 96402800.5
(22) Date de dépôt: 18.12.1996
(51) Int. Cl.: H02K 3/24, H02K 15/00, B23K 26/00

(54) **Procédé et dispositif de restauration de l'étanchéité d'organes de raccordement tels que des boîtes à eau d'alternateurs à refroidissement mixte eau-hydrogène**
Verfahren und Vorrichtung zur Wiederherstellung der Dichtheit eines Verbindungsgliedes wie Wasserkammern in Generatoren mit Wasser/Wasserstoff gemischter Kühlung
Process and device for restoring the tightness of connector members such as header boxes in generators having mixed water/hydrogen cooling

(30) Priorité: 27.12.1995 FR 9515584
(43) Date de publication de la demande: 02.07.1997
(73) Titulaire: ELECTRICITE DE FRANCE Service National, 75008 Paris (FR)
(72) Inventeur: Sobrowiak, Lucien, 91800 Brunoy (FR); Adragna, Patrick, 07700 Bourg Saint Andeol (FR)
(74) Mandataire: Obolensky, Michel

(56) Documents cités:
- US-A- 4 066 203
- US-A- 4 629 917
- DATABASE WPI Week 7939 Derwent Publications Ltd., London, GB; AN 79-j3138b XP002000123 & SU 639 084 A (BYKOV) , 28 Décembre 1978

## Description

La présente invention est relative à l'entretien des alternateurs et se rapporte plus particulièrement à la restauration de l'étanchéité des boîtes à eau de barres d'alternateurs à refroidissement mixte eau-hydrogène.

Les alternateurs du type précité comportent généralement des boîtes à eau associées chacune à une barre de l'alternateur et reliées par des tuyaux à un collecteur pour le fluide de refroidissement.

Lors d'un fonctionnement prolongé de l'alternateur les boîtes à eau subissent un encrassement dû à des dépôts d'oxyde de cuivre et certaines d'entre elles présentent des défauts d'étanchéité au niveau des brasures qui existent entre les conducteurs de la barre et le corps de la boîte à eau dans laquelle ils sont fixés.

Pour traiter ce problème on a généralement recours à des procédés de sablage chimique ou mécanique et de grenaillage.

On a également envisagé de procéder par intervention interne à l'injection d'aérosols de résine époxy à l'intérieur de la boîte.

Un tel procédé est difficilement applicable est il est incompatible avec la constitution physico-chimique du fluide de refroidissement utilisé dans les installations de refroidissement d'alternateurs.

On peut également procéder par intervention externe au dépôt d'une résine de colmatage à l'arrière du faisceau de conduits entre les nappes de conducteurs.

Le résultat de cette solution est insuffisant car il n'assure pas l'étanchéité totale en raison de l'impossibilité d'un nettoyage efficace et complet des surfaces notamment à l'intérieur du faisceau.

On peut enfin procéder au remplacement de la barre d'enroulement défectueuse, ce qui est une solution très couteuse qui nécessite la dépose de une à plusieurs barres.

L'invention vise à remédier aux inconvénients des procédés existants en créant un procédé de restauration d'étanchéité in situ qui tout en étant d'un prix de revient raisonnable permette d'intervenir à des emplacements difficiles d'accès et ce avec un maximum d'efficacité.

Elle a donc pour objet un procédé de restauration de l'étanchéité d'organes de raccordement de circuits parcourus par un fluide, notamment de boîtes à eau d'alternateurs à refroidissement mixte eau-hydrogène, caractérisé en ce qu'il consiste à séparer l'organe de raccordement de l'un des conduits qui le relie au circuit afin de dégager une ouverture de cet organe pour pouvoir accéder à l'intérieur de celui-ci, tout en le laissant en place dans le circuit, à procéder au décapage d'au moins une partie de la surface interne de l'organe de raccordement par enlèvement à l'aide d'un faisceau laser introduit dans la chambre intérieure de l'organe de raccordement, d'une couche oxydée recouvrant ladite surface, à nettoyer la chambre intérieure de l'organe de raccordement par aspiration de particules de matière résultant de l'action du faisceau laser, à déposer sur la surface de la chambre intérieure de l'organe dont il y a lieu de restaurer l'étanchéité, une couche de brasure et à faire fondre cette brasure à l'aide dudit faisceau laser.

Par ailleurs l'invention a pour objet un dispositif de traitement suivant la revendication 8.

L'invention sera mieux comprise à la lecture de la description qui va suivre, faite en référence aux dessins annexés donnés uniquement à titre d'exemple et sur lesquels :
- la Fig. 1 est une vue partielle en coupe d'un circuit de refroidissement des barres d'un stator d'un alternateur du type à refroidissement mixte eau-hydrogène ;
- la Fig. 2 est une vue en coupe d'une boîte à eau du circuit de la Fig. 1 au cours de l'opération d'enlèvement de la couche oxydée dans la chambre intérieure de ladite boîte ;
- la Fig. 2A est une vue partielle en coupe suivant la ligne 2A-2A de la Fig. 2 ;
- la Fig. 3 est une vue analogue à celle de la Fig. 2, montrant l'opération d'aspiration de poussière dans la chambre de la boîte à eau ;
- la Fig. 4 est une vue analogue à celle de la Fig. 2 montrant l'opération de dépôt d'une couche de brasure dans la chambre ; et
- la Fig. 5 est une vue analogue à celle de la Fig. 2 montrant l'opération de contrôle effectuée entre les diverses phases du procédé de l'invention.

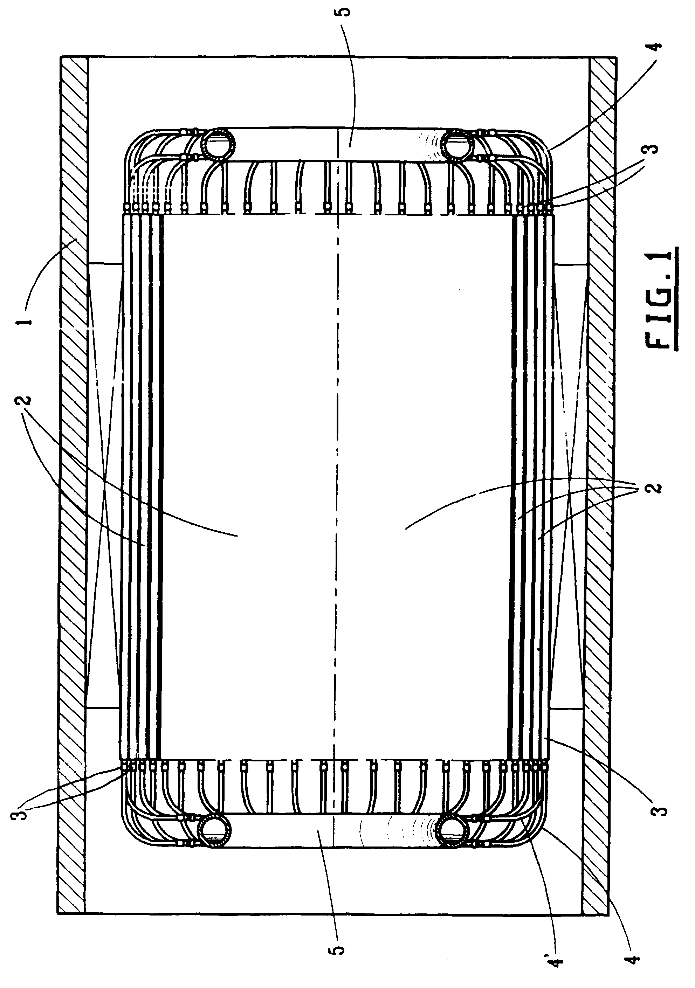

La Fig. 1 montre partiellement et schématiquement la disposition des boîtes à eau d'un circuit de refroidissement des barres d'un alternateur électrique à refroidissement mixte eau-hydrogène seul le circuit de refroidissement à eau du stator étant représenté.

Le stator 1 d'un tel alternateur est pourvu d'un ensemble de barres constituant l'enroulement statorique qui portent à chacune de leurs extrémités un organe de raccordement tel qu'une boîte à eau 3.

Chaque boîte à eau est reliée par un tuyau 4 à un collecteur annulaire 5 pour le fluide de refroidissement du stator de l'alternateur, en l'occurrence de l'eau.

Le procédé suivant l'invention fait essentiellement appel à la technologique du faisceau laser et de la fibroscopie industrielle.

Il a essentiellement pour but d'intervenir directement sur la machine sans remplacement des barres dont les boîtes à eau présentent des défauts d'étanchéité au niveau des brasures.

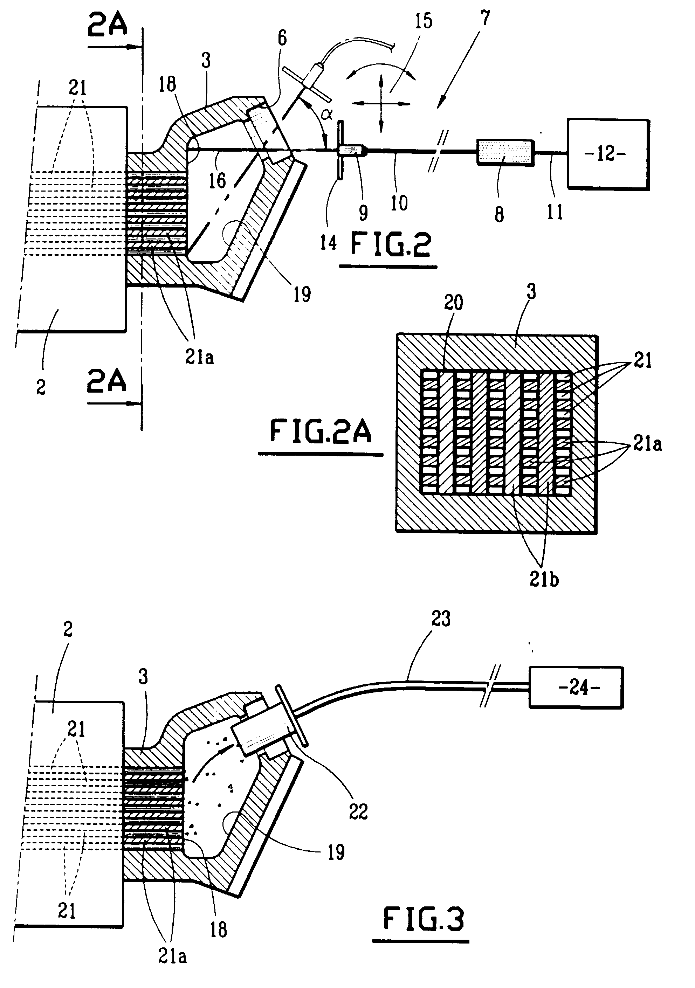

Le procédé de l'invention dont les diverses phases vont être décrites en référence aux figures 2 à 5 consiste après avoir repéré une barre dont la boîte à eau présente un défaut d'étanchéité, à retirer de la boîte à eau 3 son tuyau 4 de liaison avec le collecteur 5 pour dégager ainsi l'entrée 6 de la boîte à eau.

On met alors en place un dispositif de décapage de la couche oxydée et de la pollution de la surface intérieure de la boîte à eau.

Ce dispositif qui porte la référence générale 7 comporte une tête laser 8 reliée à un objectif de focalisation 9 par des fibres optiques 10. Le laser est relié par des conducteurs électriques 11 à une armoire de contrôle électronique et d'alimentation 12.

L'objectif 9 est monté sur un robot 14 programmé et téléguidé par un ordinateur (non représenté).

Il est donc déplaçable dans différentes directions indiquées par les flèches croisées 15 pour permettre au faisceau laser 16 qu'il émet de balayer ainsi toute la surface 18 de la chambre intérieure 19 de la boîte qu'il y a lieu de décaper.

Le déplacement angulaire résultant de l'objectif 9 est représenté à la Fig. 2 par l'angle α que fait le faisceau laser 16 dans sa position représentée en trait plein dans laquelle il frappe le haut de la surface 18 de la chambre intérieure 19 de la boîte à eau et la position inclinée représentée en trait mixte dans laquelle il frappe la surface inférieure de ladite surface 18.

Sur la Fig. 2A on a représenté en coupe la partie de la boîte à eau 3 destinée au raccordement de ladite boîte avec une barre 2 à refroidir. Dans le corps de la boîte 3 est ménagé un orifice rectangulaire 20 dans lequel sont engagés des conducteurs creux 21 et pleins 21a pénétrant dans la barre 2 et, le fluide de refroidissement circulant dans les conducteurs creux 21. Les colonnes de conducteurs creux 21 et pleins 21a sont séparées par des plaques 21b métalliques formant entretoises.

On conçoit que la face 18 de la chambre intérieure 19 de la boîte à eau sur laquelle débouchent les conducteurs creux 21 en forme de tubes, est sujette à un encrassement par dépôt d'une couche d'oxydation ou d'autres matières polluantes et que ce dépôt provoque l'apparition de défauts d'étanchéité entre l'orifice 20 et les conducteurs 21,21a qu'il contient.

En effet, les dépôts de matière oxydée accentuent éventuellement les défauts de brasage qu'il peut y avoir entre les conducteurs 21 et 21a et l'orifice 20.

Au cours de l'opération de décapage on balaye donc tout d'abord l'ensemble de la surface intérieure 18 de la chambre 19 à l'aide du faisceau laser 16 et on détruit par enlèvement thermique la couche oxydée déposée sur cette surface.

Après avoir procédé à cette première opération de décapage on retire le dispositif à faisceau laser et on le remplace par un dispositif d'aspiration 22 composé d'une buse d'aspiration de forme et de dimensions adaptées à l'ouverture 6 de la boîte à eau, d'un tube souple 23 et d'un aspirateur 24.

On provoque ainsi l'évacuation hors de la chambre 19 des particules résultant de la destruction de la couche d'oxydation au cours de l'opération précédente.

Cette opération d'aspiration illustrée par la Fig. 3 est utilisée en alternance avec l'opération de décapage qui peut être répétée autant de fois qu'il est nécessaire pour obtenir un bon nettoyage de la surface intérieure 18 de la chambre 19 de la boîte à eau.

Après la dernière opération d'aspiration on injecte à l'intérieur de la boîte un solvant pour obtenir un nettoyage définitif de la surface décapée 18.

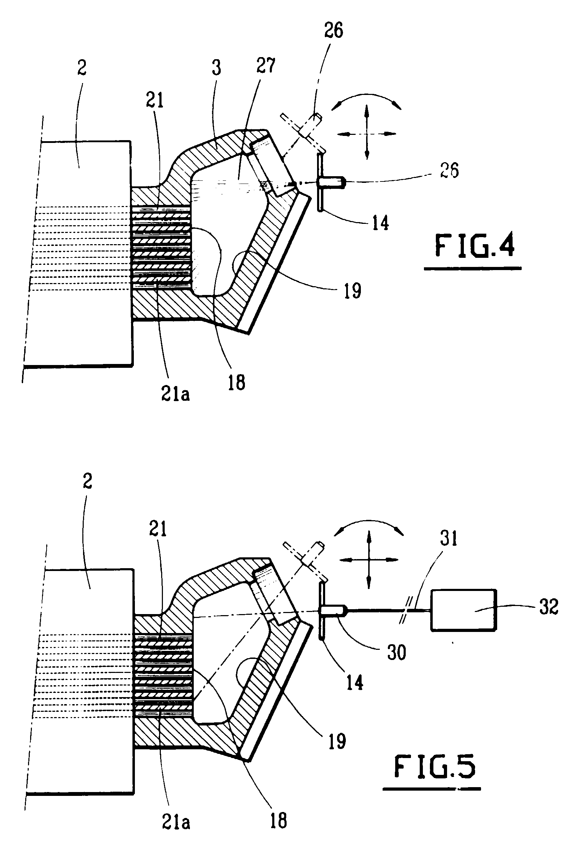

L'opération de nettoyage précitée est suivie d'une opération de dépôt d'une couche de brasure illustrée à la Fig. 4.

Pour procéder à cette opération on dispose d'un pistolet 26 de pulvérisation que l'on monte sur le robot 14 à la place de l'objectif 9 du dispositif de décapage au faisceau laser et on projette sur la surface 18 de la chambre intérieure 19 de la boîte à eau 3 une couche de brasure par pulvérisation en faisant balayer au jet 27 du pistolet 26 l'ensemble de la surface 18.

Cette opération peut également être réalisée à l'aide d'un pistolet à plasma pulsé.

Lorsque la brasure est déposée sur la surface 18 de la chambre intérieure 19, on procède à la fusion de cette brasure en substituant à nouveau au pistolet 26, l'objectif 9 du dispositif laser et en faisant parcourir au faisceau laser la même trajectoire de balayage de la surface 18 que celle qu'il avait parcourue lors de l'opération de décapage.

Ainsi, la brasure fondue pénètre dans les fentes dégagées lors de l'opération de décapage et rétablit l'étanchéité de la boîte à eau.

Entre les opérations de décapage, de dépoussiérage par aspiration et de dépôt d'une nouvelle couche de brasure, on procède à une opération de contrôle à l'aide d'un système fibroscopique représenté à la Fig. 5.

Sur le robot 14 on monte une caméra vidéo 30 à laquelle on fait balayer au moyen du robot 14 l'ensemble de la surface subissant successivement les traitements de décapage, de dépoussiérage et de dépôt de brasure.

La caméra 30 est reliée par un faisceau de fibres optiques 31 à un système vidéo 32 qui permet l'observation sur un écran de la surface 18 de la chambre 19 de la boîte à eau.

Grâce au système de contrôle de la Fig. 5 utilisé entre les diverses opérations de traitement de la surface interne de la boîte à eau il est possible de repérer les micro-fentes apparaissant après l'opération de décapage et de contrôler l'obturation de ces micro-fentes à l'aide de la couche de brasure déposée au cours de l'opération illustrée à la Fig. 4.

Le procédé qui vient d'être décrit est considéré comme étant appliqué à la restauration de l'étanchéité de boîtes à eau d'un alternateur. Il est toutefois possible d'envisager son utilisation pour restaurer l'étanchéité de tout organe de raccordement entre éléments d'un circuit pour un fluide, notamment un fluide de refroidissement.

On peut par exemple envisager l'application du procédé de l'invention pour la restauration de l'étanchéité de composants pétrochimiques, d'équipements de l'industrie alimentaire, maritimes, de chemins de fer, d'équipements miniers, nucléaires, industriels, automobiles ou militaires.

## Revendications

1. Procédé de restauration de l'étanchéité d'organes de raccordement (3) de circuits parcourus par un fluide, notamment de boîtes à eau d'alternateurs à refroidissement mixte eau-hydrogène, caractérisé en ce qu'il consiste à séparer l'organe de raccordement (3) de l'un des conduits (4) qui le relie au circuit afin de dégager une ouverture (6) de cet organe pour pouvoir accéder à l'intérieur de celui-ci, tout en le laissant en place dans le circuit, à procéder au décapage d'au moins une partie de la surface intérieure de l'organe de raccordement par enlèvement à l'aide d'un faisceau laser (16) introduit dans la chambre intérieure (19) de l'organe de raccordement (3), d'une couche oxydée recouvrant ladite surface (18), à nettoyer la chambre intérieure (19) de l'organe de raccordement (3) par aspiration de particules de matière résultant de l'action du faisceau laser (16), à déposer sur la surface (18) de la chambre intérieure (19) de l'organe dont il y a lieu de restaurer l'étanchéité, une couche de brasure et à faire fondre cette brasure à l'aide dudit faisceau laser (16).

2. Procédé suivant la revendication 1, caractérisé en ce qu'au cours des phases de balayage et de fusion de la brasure on fait balayer au faisceau laser (16) la surface (18) de la chambre intérieure (19) de l'organe de raccordement en faisant subir à un objectif (9) de focalisation du faisceau laser des déplacements de balayage de ladite surface.

3. Procédé suivant l'une des revendications 1 et 2, caractérisé en ce que l'aspiration des particules de matières résultant de l'action du faisceau laser (16) est réalisée au moyen d'une buse d'aspiration (22) introduite par l'ouverture (6), de l'organe de raccordement (3), ladite buse (22) étant reliée à un aspirateur (24).

4. Procédé suivant la revendication 2 et 3, caractérisé en ce que les opérations de décapage et d'aspiration sont répétées jusqu'à l'obtention d'une surface suffisamment décapée et dépoussiérée.

5. Procédé suivant la revendication 3, caractérisé en ce qu'après la dernière opération d'aspiration des particules de matière résultant de l'action du faisceau laser (16) on injecte à l'intérieur de l'organe de raccordement (3) un solvant pour assurer un nettoyage définitif de la surface (18) dudit organe.

6. Procédé suivant l'une des revendications 1 à 5 caractérisé en ce que l'opération de dépôt de brasure sur la surface (18) de la chambre intérieure (19) de l'organe de raccordement (3) est assuré par un pistolet de pulvérisation (26) auquel on fait balayer la surface (18) de la chambre (19) de l'organe de raccordement (3) dont il y a lieu de restaurer l'étanchéité.

7. Procédé suivant, l'une des revendications 1 à 6, caractérisé en ce qu'entre une opération de décapage et une opération d'aspiration des particules, entre une opération d'aspiration des particules et une opération de dépôt'd'une couche de brasure et après une opération de fusion de la brasure on fait subir à la surface (18) traitée de la chambre intérieure (19) de l'organe de raccordement (3) une opération de contrôle consistant à observer au moyen d'une caméra vidéo (30) et d'un système vidéo (32) l'état de ladite surface (18).

8. Dispositif de traitement d'une surface intérieure d'un organe de raccordement (3) d'un circuit parcouru par un fluide en vue de restaurer l'étanchéité dudit organe par le procédé suivant l'une quelconque des revendications 1 à 7, caractérisé en ce qu'il comporte un dispositif laser comprenant un objectif (9) destiné lors des opération de décapage et de fusion de la brasure à projeter un faisceau laser (16) sur la surface interne (18) de l'organe de raccordement (3) une tête de laser (8) reliée à l'objectif par un faisceau de fibres optiques (10) et connecté à une armoire (12) de contrôle électronique et d'alimentation, l'objectif (9) étant porté par des moyens de déplacement (14) de manière à balayer la surface (18) à traiter, des moyens (22, 23, 24) d'aspiration des particules de matière résultant de l'action de décapage du faisceau laser (16), et des moyens (26) de dépôt de brasure sur la surface (18) à traiter, lesdits moyens de dépôt de brasure étant substituables audit objectif (9) sur les moyens de déplacement (14).

9. Dispositif suivant la revendication 8, caractérisé en ce qu'il comporte en outre des moyens d'inspection de la surface (18) à traiter comprenant une caméra vidéo (30) pouvant être substituée audit objectif (9) ou auxdits moyens de dépôt (26) sur les moyens de déplacement (14) et un système vidéo (32) relié à ladite caméra (30) par un faisceau de fibres optiques (31).

10. Dispositif suivant l'une des revendications 8 et 9, caractérisé en ce que les moyens de dépôt de brasure comprennent un pistolet de pulvérisation (26) ou une torche à plasma pulsé.

11. Dispositif suivant l'une des revendications 8 à 10, caractérisé en ce que lesdits moyens de déplacement (14) tour à tour de l'objectif (9) du dispositif laser, des moyens de pulvérisation (26) et de la caméra vidéo (30) comprennent un robot programmé et téléguidé par ordinateur.

## Patentansprüche

1. Verfahren zur Wiederherstellung der Dichtigkeit von Verbindungsorganen (3) von durch ein Fluid durchströmten Kreisläufen, insbesondere von Wasserkästen von Wasser-Wasserstoff-Kältegeneratoren, dadurch gekennzeichnet, daß es darin besteht, das Verbindungsorgan (3) von einer der Leitungen (4) zu trennen, die mit dem Kreislauf verbunden ist, um eine Öffnung (6) dieses Organs freizugeben, um Zugriff auf das Innere desselben zu gewinnen, wobei die Leitung an Ort und Stelle bleibt, das Abbeizen von zumindest einem Teil der Innenseite des Verbindungsorgans durchzuführen, indem mit Hilfe eines Laserstrahls (16), der in die Innenkammer (19) des Verbindungsorgans (3) eingeführt wird, eine Oxidationsschicht abgetragen wird, welche diese Fläche (18) bedeckt, die Innenkammer (19) des Verbindungsorgans (3) durch Saugen von Materialpartikeln zu trocknen, die durch den Betrieb des Laserstrahls (16) hervorgerufen sind, auf der Oberfläche (18) der Innenkammer (19) des Organs dessen Dichtigkeit wiederhergestellt werden soll, Hartlot abzuscheiden und dieses Hartlot mit Hilfe des Laserstrahls (16) zu schmelzen.

2. Verfahren nach Anspruch 1, dadurch gekennzeichnet, daß im Verlauf von Abtast- und Schmelzphasen für das Hartlot der Laserstrahl (16) abtastend über die Oberflache (18) des Innenraums (19) des Verbindungsorgans geführt wird, indem das Objektiv (9) zur Fokussierung des Laserstrahls Abtastverschiebebewegungen gegenüber der Oberfläche ausgesetzt wird.

3. Verfahren nach Anspruch 1 oder 2, dadurch gekennzeichnet, daß das Absaugen der Materialpartikel, herrührend aus dem Betrieb des Laserstrahls (16) mittels einer Saugdüse (22) vorgenommen wird, die durch die Öffnung (6) des Verbindungsorgans (3) eingeführt wird, wobei die Düse (22) mit einer Absaugvorrichtung (24) verbunden ist.

4. Verfahren nach Anspruch 2 und 3, dadurch gekennzeichnet, daß die Abbeiz- und Absaugvorgänge wiederholt werden, bis eine ausreichend abgebeizte und staubfreie Oberfläche gewonnen ist.

5. Verfahren nach Anspruch 3, dadurch gekennzeichnet, daß nach dem letzten Materialpartikel-Absaugvorgang, hervorgerufen durch den Laserstrahl (16) in das Innere des Verbindungsorgans (3) ein Lösungsmittel eingetragen wird, um eine endgültige Trocknung der Oberfläche (18) des Organs sicherzustellen.

6. Verfahren nach einem der Ansprüche 1 bis 5, dadurch gekennzeichnet, daß der Vorgang der Abscheidung von Hartlot auf der Oberfläche (18) der Innenkammer (19) des Verbindungsorgans (3) durch eine Sprühpistole (26) sichergestellt wird, mit welcher die Oberfläche der Kammer (19) des Verbindungsorgans (3) abgetastet bzw. gereinigt wird, dessen Dichtigkeit wiederhergestellt wird.

7. Verfahren nach einem der Ansprüche 1 bis 6, dadurch gekennzeichnet, daß zwischen einem Abbeizvorgang und einem Partikel-Absaugvorgang, zwischen einem Absaugvorgang der Partikel und einem Abscheidungsvorgang einer Hartlotschicht und nach einem Schmelzvorgang des Hartlots die behandelte Oberfläche der Innenkammer (19) des Verbindungsorgans (3) einem Kontrollvorgang unterworfen wird, der darin besteht, mittels einer Videokamera (30) und einem Videosystem (32) den Zustand der Oberfläche (18) zu beobachten.

8. Vorrichtung zur Behandlung einer Innenseite eines Verbindungsorgans (3) eines Kreislaufs, der durch ein Fluid durchsetzt ist, um die Dichtigkeit des Organs durch das Verfahren nach einem der Ansprüche 1 bis 7 wiederherzustellen, dadurch gekennzeichnet, daß es eine Lasereinrichtung umfaßt, die ein Objektiv (9) umfaßt, das dazu bestimmt ist, bei dem Abbeizvorgang und dem Schmelzvorgang für das Hartlot, einen Laserstrahl (16) auf die Innenseite (18) des Verbindungsorgans (3) eines Laserkopfs (8) zu projizieren, der mit dem Objektiv verbunden ist, und zwar durch ein Bündel (10) aus optischen Fasern, und die verbunden ist mit einem elektronischen Steuer- und Stromversorgungsschrank (12), wobei das Objektiv (9) durch Verschiebemittel (14) derart getragen ist, daß es die Oberfläche (18) abzutasten vermag, Mittel (22, 23, 24) zum Absaugen von Materialpartikeln, die aus dem Abbeizbetrieb des Laserstrahls (16) herrühren, und Mittel (26) zur Abscheidung von Hartlot auf der zu behandelnden Oberfläche (18), wobei die Mittel zur Abscheidung des Hartlots das Objektiv (9) auf den Verschiebemitteln (14) ersetzen kann.

9. Vorrichtung nach Anspruch 8, dadurch gekennzeichnet, daß sie außerdem Mittel zur Überprüfung der zu behandelnden Oberfläche (18) umfassen, die eine Videokamera (30) aufweisen, welche das Objektiv (9) oder die Abscheidemittel (26) auf den Verschiebemitteln (14) ersetzen kann, und ein Videosystem (32), welches mit der Kamera (30) durch ein Bündel (31) aus optischen Fasern verbunden ist.

10. Vorrichtung nach Anspruch 8 und 9, dadurch gekennzeichnet, daß die Mittel zur Abscheidung von Hartlot eine Zerstäubungspistole (26) oder einen Plasmaimpulsbrenner umfassen.

11. Vorrichtung nach einem der Ansprüche 8 bis 10, dadurch gekennzeichnet, daß die Verschiebemittel (14) umlaufend um das Objektiv (9) der Lasereinrichtung, der Zerstäubungsmittel (26) und der Videokamera (30) bzw. diesen zugeordnet einen Roboter umfassen, der programmiert und durch einen Rechner ferngesteuert ist.

## Claims

1. Process for restoring the fluidtightness of connector members (3) of circuits through which a fluid travels, particularly header boxes of alternators with mixed water/hydrogen cooling, characterized in that it consists in separating the connector member (3) from one of the pipes (4) which connects it to the circuit so as to uncover an opening (6) of this member so that access can be had to the inside of this member, while leaving it in place in the circuit, in descaling at least part of the interior surface of the connector member by using a laser beam (16) introduced into the interior chamber (19) of the connector member (3) to remove an oxidized layer covering the said surface (18), in cleaning the interior chamber (19) of the connector member (3) by sucking out particles of material resulting from the action of the laser beam (16), in depositing a layer of solder on the surface (18) of the interior chamber (19) of the member whose fluidtightness needs to be restored and in melting this solder using the said laser beam (16).

2. Method according to Claim 1, characterized in that during the sweeping and solder-melting phases, the surface (18) of the interior chamber (19) of the connector member is swept with the laser beam (16) by causing a lens (9) for focusing the laser beam to undergo displacements which sweep the said surface.

3. Method according to either of Claims 1 and 2, characterized in that the particles of material resulting from the action of the laser beam (16) are sucked out using a suction nozzle (22) introduced through the opening (6) of the connector member (3), the said nozzle (22) being connected to a suction device (24).

4. Method according to Claims 2 and 3, characterized in that the descaling and suction operations are repeated until a sufficiently descaled and dust-free surface is obtained.

5. Method according to Claim 3, characterized in that after the last operation of sucking out the particles of material resulting from the action of the laser beam (16), a solvent is injected inside the connector member (3) to perform a final cleaning of the surface (18) of the said member.

6. Method according to one of Claims 1 to 5, characterized in that the operation of depositing solder on the surface (18) of the interior chamber (19) of the connector member (3) is performed using a spray gun (26) with which the surface (18) of the chamber (19) of the connector member (3) whose fluidtightness needs to be restored is swept.

7. Method according to one of Claims 1 to 6, characterized in that between a descaling operation and an operation of sucking out particles, between an operation of sucking out particles and an operation of depositing a layer of solder and after an operation of melting the solder, the treated surface (18) of the interior chamber (19) of the connector member (3) undergoes an inspection operation which consists in using a video camera (30) and a video system (32) to observe the condition of the said surface (18).

8. Device for treating an interior surface of a connector member (3) of a circuit through which a fluid travels, with a view to restoring the fluidtightness of the said member using the process according to any one of Claims 1 to 7, characterized in that it includes a laser device comprising a lens (9) intended, during the descaling operation and the operation of melting the solder, to project a laser beam (16) onto the internal surface (18) of the connector member (3), a laser head (8) connected to the lens by a bundle of optical fibres (10) and connected to an electronic power and control cabinet (12), the lens (9) being borne by displacement means (14) so that it can sweep the surface (18) that is to be treated, means (22, 23, 24) for sucking out the particles of material that result from the descaling action of the laser beam (16), and means (26) for depositing solder on the surface (18) that is to be treated, the said solder-depositing means being substitutable for the said lens (9) on the displacement means (14).

9. Device according to Claim 8, characterized in that it further comprises means of inspecting the surface (18) that is to be treated, these means comprising a video camera (30) which can be substituted for the said lens (9) or for the said deposition means (26) on the displacement means (14) and a video system (32) connected to the said camera (30) by a bundle of optical fibres (31).

10. Device according to one of Claims 8 and 9, characterized in that the means for depositing solder comprise a spray gun (26) or a pulsed-plasma torch.

11. Device according to one of Claims 8 to 10, characterized in that the said means (14) for displacing, in turn, the lens (9) of the laser device, the spray means (26) and the video camera (30) comprise a programmed computer-guided robot.
